# EUROPEAN PATENT APPLICATION

(11) **EP 3 503 615 A1**
(43) Date of publication of application: **26.06.2019**
(21) Application number: 17854910.1
(22) Date of filing: 27.09.2017
(51) Int. Cl.: H04W 24/08, H04L 5/00

(54) **METHOD AND DEVICE FOR MEASURING INTERFERENCE FROM TERMINAL APPARATUS TO TERMINAL APPARATUS**

(30) Priority: 30.09.2016 CN 201610877942
(71) Applicant: Huawei Technologies Co., Ltd., Longgang District Shenzhen, Guangdong 518129 (CN)
(72) Inventor: SUN, Wei, Shenzhen Guangdong 518129 (CN); GUO, Zhiheng, Shenzhen Guangdong 518129 (CN); XIE, Xinqian, Shenzhen Guangdong 518129 (CN)
(74) Representative: Gill Jennings & Every LLP
(86) International application number: PCT/CN2017/103793
(87) International publication number: WO 2018/059460

(57) **Abstract**

Embodiments of this application relate to the field of communications technologies, and provide a method for measuring interference between terminal devices and an apparatus, so as to determine another terminal device that causes interference to a terminal device, thereby preventing interference. The method includes: sending, by a first network device, first indication information to a first terminal device, where the first indication information is used to instruct the first terminal device to generate a pilot sequence based on sequence parameters and send the pilot sequence on a time-frequency resource, and the first terminal device is a terminal device within a coverage area of the first network device; and sending, by the first network device, second indication information to a second network device, where the second indication information is used to instruct the second network device to trigger a second terminal device to: detect the pilot sequence on the time-frequency resource based on the sequence parameters, and determine whether the first terminal device is an interference source of the second terminal device, and the second terminal device is a terminal device within a coverage area of the second network device.

## Description

This application claims priority to Chinese Patent Application No. 201610877942.7, filed with the Chinese Patent Office on September 30, 2016 and entitled "METHOD AND APPARATUS FOR MEASURING INTERFERENCE BETWEEN TERMINAL DEVICES", which is incorporated herein by reference in its entirety.

### TECHNICAL FIELD

This application relates to the field of communications technologies, and in particular, to a method and an apparatus for measuring interference between terminal devices.

### BACKGROUND

In a Long Term Evolution (Long Term Evolution, LTE)/Long Term Evolution Advanced (Long Term Evolution Advanced, LTE-A) system, downlink transmission and uplink transmission are included. In downlink transmission, a base station sends data to a terminal, and in uplink transmission, a terminal sends data to a base station. When communication is performed in a Time Division Duplex (Time Division Duplex, TDD) mode, within a period of time, an entire frequency band is used only for downlink transmission or only for uplink transmission. In addition, for an area covered by a same frequency band, all cells in the area are synchronous.

Terminals in the system are not evenly distributed, communication services of the terminals also differ drastically, and for cells covered by a same frequency band, there is a relatively large difference between a downlink traffic volume and an uplink traffic volume at a same moment. Therefore, if all cells use same uplink and downlink transmission configurations, service requirements of terminals in each cell cannot be efficiently met. Therefore, to improve utilization of transmission resources in the system, separate transmission configuration may be performed for each cell by using a flexible duplex technology, for example, by dynamically scheduling uplink and downlink transmission within each transmission time interval (Transmission Time Interval, TTI).

However, within a same TTI, if UE 1 that is performing downlink transmission is relatively near to UE 2 that is performing uplink transmission in a neighboring cell of a serving cell of UE 1, UE 1 may receive uplink data of UE 2. As a result, interference is caused to downlink data reception of UE 1, and downlink transmission of UE 1 may fail.

### SUMMARY

Embodiments of this application provide a method and an apparatus for measuring interference between terminal devices, so as to determine another terminal device that causes interference to a terminal device, so that a base station serving the terminal device and a base station serving the another terminal device can perform coordinated scheduling, thereby preventing the another terminal device from causing interference to the terminal device.

To achieve the foregoing objective, the following technical solutions are used in the embodiments of this application.

According to a first aspect, an embodiment of this application provides a method for measuring interference between terminal devices. The method includes: sending, by a first network device, first indication information to a first terminal device, where the first indication information is used to instruct the first terminal device to generate a pilot sequence based on sequence parameters and send the pilot sequence on a time-frequency resource, and the first terminal device is a terminal device within a coverage area of the first network device; and sending, by the first network device, second indication information to a second network device, where the second indication information is used to instruct the second network device to trigger a second terminal device to: detect the pilot sequence on the time-frequency resource based on the sequence parameters, and determine whether the first terminal device is an interference source of the second terminal device, and the second terminal device is a terminal device within a coverage area of the second network device.

According to the method provided in this embodiment of this application, the first network device instructs the first terminal device to send, on the specified time-frequency resource, the pilot sequence generated based on the specified sequence parameters, and instructs, by using the second network device, the second terminal device to: detect the pilot sequence on the time-frequency resource based on the sequence parameters, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the method further includes: receiving, by the first network device, interference source information sent by the second network device, where the interference source information is used to indicate that the first terminal device is an interference source of the second terminal device.

According to a second aspect, an embodiment of this application provides a method for measuring interference between terminal devices. The method includes: receiving, by a first terminal device, first indication information sent by a first network device, where the first indication information is used to instruct the first terminal device to generate a pilot sequence based on sequence parameters and send the pilot sequence on a time-frequency resource, and the first terminal device is a terminal device within a coverage area of the first network device; generating, by the first terminal device, the pilot sequence based on the sequence parameters; and sending, by the first terminal device, the pilot sequence on the time-frequency resource, where the pilot sequence is used by a second terminal device that receives the pilot sequence, to determine whether the first terminal device is an interference source of the second terminal device, and the second terminal device is a terminal device within a coverage area of a second network device.

According to the method provided in this embodiment of this application, the first terminal sends, on the specified time-frequency resource, the pilot sequence generated based on the sequence parameters, so that the second terminal device can determine, by detecting the pilot sequence on the time-frequency resource based on the sequence parameters, whether the first terminal device is an interference source of the second terminal device, so as to implement measurement performed by the second terminal device on the interference source of the second terminal device. Therefore, when the first terminal device is an interference source of the second terminal, if the second network device serving the second terminal device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the sending, by the first terminal device, the pilot sequence on the time-frequency resource includes: sending, by the first terminal device, the pilot sequence on the time-frequency resource in an extended cyclic prefix manner.

In a possible design, the sending, by the first terminal device, the pilot sequence on the time-frequency resource includes: sending, by the first terminal device, the pilot sequence on the time-frequency resource by using transmit power of a physical uplink shared channel.

According to a third aspect, an embodiment of this application provides a method for measuring interference between terminal devices. The method includes: receiving, by a second network device, second indication information sent by a first network device, where the second indication information is used to instruct the second network device to trigger a second terminal device to: detect a pilot sequence on a time-frequency resource based on sequence parameters, and determine whether a first terminal device is an interference source of the second terminal device, the pilot sequence is generated by the first terminal based on the sequence parameters, the second terminal device is a terminal device within a coverage area of the second network device, and the first terminal device is a terminal device within a coverage area of the first network device; and sending, by the second network device, third indication information to the second terminal device, where the third indication information is used to instruct the second terminal device to: detect the pilot sequence on the time-frequency resource based on the sequence parameters, and determine whether the first terminal device is an interference source of the second terminal device.

According to the method provided in this embodiment of this application, the second network device instructs the second terminal device to: detect, on the specified time-frequency resource based on the specified sequence parameters, the pilot sequence generated by the first terminal device based on the sequence parameters, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the method further includes: receiving, by the second network device, fourth indication information sent by the second terminal, where the fourth indication information is used to indicate that the first terminal is an interference source of the second terminal; and sending, by the second network device, interference source information to the first network device based on the fourth indication information, to indicate, to the first network device, that the first terminal is an interference source of the second terminal.

According to a fourth aspect, an embodiment of this application provides a method for measuring interference between terminal devices. The method includes: receiving, by a second terminal device, third indication information sent by a second network device, where the third indication information is used to instruct the second terminal device to: detect a pilot sequence on a time-frequency resource based on sequence parameters, and determine whether a first terminal device is an interference source of the second terminal device, the pilot sequence is generated by the first terminal based on the sequence parameters, the second terminal device is a terminal device within a coverage area of the second network device, and the first terminal device is a terminal device within a coverage area of the first network device; detecting, by the second terminal device on the time-frequency resource based on the third indication information and the sequence parameters, the pilot sequence sent by the first terminal device, and determining that the first terminal device is an interference source of the second terminal device; and sending, by the second terminal device, fourth indication information to the second network device, where the fourth indication information is used to indicate that the first terminal device is an interference source of the second terminal device.

According to the method provided in this embodiment of this application, the second terminal device can detect, on the specified time-frequency resource based on an instruction of the second network device and the specified sequence parameters, the pilot sequence generated by the first terminal device based on the sequence parameters, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the detecting, by the second terminal device on the time-frequency resource based on the third indication information and the sequence parameters, the pilot sequence sent by the first terminal device, and determining that the first terminal device is an interference source of the second terminal device includes: receiving, by the second terminal on the time-frequency resource based on the third indication information and the sequence parameters, the pilot sequence sent by the first terminal device; and when the second terminal device determines that receive power at which the pilot sequence is received is greater than or equal to a threshold, determining, by the second terminal device, that the first terminal device is an interference source.

According to a fifth aspect, an embodiment of this application provides a network device, including: a sending unit, configured to send first indication information to the first terminal device, where the first indication information is used to instruct the first terminal device to generate a pilot sequence based on sequence parameters and send the pilot sequence on a time-frequency resource, and the first terminal device is a terminal device within a coverage area of the network device; where the sending unit is further configured to send second indication information to a second network device, where the second indication information is used to instruct the second network device to trigger a second terminal device to: detect the pilot sequence on the time-frequency resource based on the sequence parameters, and determine whether the first terminal device is an interference source of the second terminal device, and the second terminal device is a terminal device within a coverage area of the second network device.

In a possible design, the network device further includes a receiving unit, and the receiving unit is configured to receive interference source information sent by the second network device, where the interference source information is used to indicate that the first terminal device is an interference source of the second terminal device.

For technical effects of the network device provided in this embodiment of this application, refer to technical effects of the foregoing first aspect or each optional manner of the first aspect, and details are not described herein again.

According to a sixth aspect, an embodiment of this application provides a terminal device, including: a receiving unit, configured to receive first indication information sent by a first network device, where the first indication information is used to instruct the terminal device to generate a pilot sequence based on sequence parameters and send the pilot sequence on a time-frequency resource, and the terminal device is a terminal device within a coverage area of the first network device; a generation unit, configured to generate the pilot sequence based on the sequence parameters; and a sending unit, configured to send, on the time-frequency resource, the pilot sequence generated by the generation unit, where the pilot sequence is used by a second terminal device that receives the pilot sequence, to determine whether the terminal device is an interference source of the second terminal device, and the second terminal device is a terminal device within a coverage area of a second network device.

In a possible design, the sending unit is specifically configured to send the pilot sequence on the time-frequency resource in an extended cyclic prefix manner.

In a possible design, the sending unit is specifically configured to send the pilot sequence on the time-frequency resource by using transmit power of a physical uplink shared channel.

For technical effects of the terminal device provided in this embodiment of this application, refer to technical effects of the foregoing second aspect or each optional manner of the second aspect, and details are not described herein again.

According to a seventh aspect, an embodiment of this application provides a network device, including: a receiving unit, configured to receive second indication information sent by a first network device, where the second indication information is used to instruct the network device to trigger a second terminal device to: detect a pilot sequence on a time-frequency resource based on sequence parameters, and determine whether a first terminal device is an interference source of the second terminal device, the pilot sequence is generated by the first terminal based on the sequence parameters, the second terminal device is a terminal device within a coverage area of the second network device, and the first terminal device is a terminal device within a coverage area of the first network device; and a sending unit, configured to send third indication information to the second terminal device, where the third indication information is used to instruct the second terminal to: detect the pilot sequence on the time-frequency resource based on the sequence parameters, and determine whether the first terminal device is an interference source of the second terminal device.

In a possible design, the receiving unit is further configured to receive fourth indication information sent by the second terminal, where the fourth indication information is used to indicate that the first terminal is an interference source of the second terminal; and the sending unit is further configured to send interference source information to the first network device based on the fourth indication information received by the receiving unit, to indicate, to the first network device, that the first terminal is an interference source of the second terminal.

For technical effects of the network device provided in this embodiment of this application, refer to technical effects of the foregoing third aspect or each optional manner of the third aspect, and details are not described herein again.

According to an eighth aspect, an embodiment of this application provides a terminal device, including: a receiving unit, configured to receive third indication information sent by a second network device, where the third indication information is used to instruct a detection unit to: detect a pilot sequence on a time-frequency resource based on sequence parameters, and determine whether a first terminal device is an interference source of the terminal device, the pilot sequence is generated by the first terminal based on the sequence parameters, the terminal device is a terminal device within a coverage area of the second network device, and the first terminal device is a terminal device within a coverage area of the first network device; the detection unit, configured to: detect, on the time-frequency resource based on the third indication information and the sequence parameters, the pilot sequence sent by the first terminal device, and determine that the first terminal device is an interference source of the terminal device; and a sending unit, configured to send fourth indication information to the second network device, where the fourth indication information is used to indicate that the first terminal device is an interference source of the terminal device.

In a possible design, the detection unit is specifically configured to: receive, on the time-frequency resource based on the third indication information and the sequence parameters, the pilot sequence sent by the first terminal device; and when determining that receive power at which the pilot sequence is received is greater than or equal to a threshold, determine that the first terminal device is an interference source.

For technical effects of the terminal device provided in this embodiment of this application, refer to technical effects of the foregoing fourth aspect or each optional manner of the fourth aspect, and details are not described herein again.

In a possible design, the sequence parameters in the foregoing first aspect to the eighth aspect include an identifier of the first network device and an identifier of the first terminal device, and the identifier of the first terminal device is allocated by the first network device to the first terminal device. The identifier of the first terminal device is a number or a cyclic shift allocated by the first network device to the first terminal device.

According to a ninth aspect, an embodiment of this application provides a method for measuring interference between terminal devices. The method includes: sending, by a first network device, fifth indication information to a first terminal device, where the fifth indication information is used to instruct the first terminal device to generate a pilot sequence based on an identifier of the first network device, and send the pilot sequence on a time-frequency resource, and the first terminal device is a terminal device within a coverage area of the first network device; and sending, by the first network device, sixth indication information to a second network device, where the second indication information is used to instruct the second network device to trigger a second terminal device to: detect the pilot sequence on the time-frequency resource based on the identifier of the first network device, and determine whether the first terminal device is an interference source of the second terminal device, and the second terminal device is a terminal device within a coverage area of the second network device.

According to the method provided in this embodiment of this application, the first network device instructs the first terminal device to send, on the specified time-frequency resource, the pilot sequence generated based on the identifier of the first network device, and instructs, by using the second network device, the second terminal device to: detect the pilot sequence on the time-frequency resource based on the identifier of the first network device, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the method further includes: receiving, by the first network device, interference source information sent by the second network device, where the interference source information is used to indicate that the first terminal device is an interference source of the second terminal device.

According to a tenth aspect, an embodiment of this application provides a method for measuring interference between terminal devices. The method includes: receiving, by a first terminal device, fifth indication information sent by a first network device, where the fifth indication information is used to instruct the first terminal device to generate a pilot sequence based on an identifier of the first network device, and send the pilot sequence on a time-frequency resource, and the first terminal device is a terminal device within a coverage area of the first network device; generating, by the first terminal device, the pilot sequence based on the identifier of the first network device; and sending, by the first terminal device, the pilot sequence on the time-frequency resource, where the pilot sequence is used by a second terminal device that receives the pilot sequence, to determine whether the first terminal device is an interference source of the second terminal device, and the second terminal device is a terminal device within a coverage area of a second network device.

According to the method provided in this embodiment of this application, the first terminal sends, on the specified time-frequency resource, the pilot sequence generated based on the identifier of the first network device, so that the second terminal device can determine, by detecting the pilot sequence on the time-frequency resource based on the identifier of the first network device, whether the first terminal device is an interference source of the second terminal device, so as to implement measurement performed by the second terminal device on the interference source of the second terminal device. Therefore, when the first terminal device is an interference source of the second terminal, if the second network device serving the second terminal device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the sending, by the first terminal device, the pilot sequence on the time-frequency resource includes: sending, by the first terminal device, the pilot sequence on the time-frequency resource in an extended cyclic prefix manner.

In a possible design, the sending, by the first terminal device, the pilot sequence on the time-frequency resource includes: sending, by the first terminal device, the pilot sequence on the time-frequency resource by using transmit power of a physical uplink shared channel.

According to an eleventh aspect, an embodiment of this application provides a method for measuring interference between terminal devices. The method includes: receiving, by a second network device, sixth indication information sent by a first network device, where the sixth indication information is used to instruct the second network device to trigger a second terminal device to: detect a pilot sequence on a time-frequency resource based on an identifier of the first network device, and determine whether a first terminal device is an interference source of the second terminal device, the pilot sequence is generated by the first terminal based on the identifier of the first network device, the second terminal device is a terminal device within a coverage area of the second network device, and the first terminal device is a terminal device within a coverage area of the first network device; and sending, by the second network device, seventh indication information to the second terminal device, where the seventh indication information is used to instruct the second terminal device to: detect the pilot sequence on the time-frequency resource based on the identifier of the first network device, and determine whether the first terminal device is an interference source of the second terminal device.

According to the method provided in this embodiment of this application, the second network device instructs the second terminal device to: detect, on the specified time-frequency resource based on the identifier of the first network device, the pilot sequence generated by the first terminal device based on the identifier of the first network device, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the method further includes: receiving, by the second network device, eighth indication information sent by the second terminal, where the eighth indication information is used to indicate that the first terminal is an interference source of the second terminal; and sending, by the second network device, interference source information to the first network device based on the eighth indication information, to indicate, to the first network device, that the first terminal is an interference source of the second terminal.

According to a twelfth aspect, an embodiment of this application provides a method for measuring interference between terminal devices. The method includes: receiving, by a second terminal device, seventh indication information sent by a second network device, where the seventh indication information is used to instruct the second terminal device to: detect a pilot sequence on a time-frequency resource based on an identifier of a first network device, and determine whether a first terminal device is an interference source of the second terminal device, the pilot sequence is generated by the first terminal based on the identifier of the first network device, the second terminal device is a terminal device within a coverage area of the second network device, and the first terminal device is a terminal device within a coverage area of the first network device; detecting, by the second terminal device on the time-frequency resource based on the seventh indication information and the identifier of the first network device, the pilot sequence sent by the first terminal device, and determining that the first terminal device is an interference source of the second terminal device; and sending, by the second terminal device, eighth indication information to the second network device, where the eighth indication information is used to indicate that the first terminal device is an interference source of the second terminal device.

According to the method provided in this embodiment of this application, the second terminal device can detect, on the specified time-frequency resource based on an instruction of the second network device and the identifier of the first network device, the pilot sequence generated by the first terminal device based on the identifier of the first network device, and determine whether the first terminal device is an interference source of the second terminal device, so as to implement measurement performed by the second terminal device on the interference source of the second terminal device. Therefore, when the first terminal device is an interference source of the second terminal, if the second network device needs to schedule the second terminal device for downlink data transmission, the second network device can prevent, by performing coordinated scheduling with the first network device serving the interference source, the interference source of the second terminal device from performing uplink data transmission when the second terminal device performs downlink data transmission, further preventing the interference source from causing interference to downlink data of the second terminal device.

In a possible design, the detecting, by the second terminal device on the time-frequency resource based on the seventh indication information and the identifier of the first network device, the pilot sequence sent by the first terminal device, and determining that the first terminal device is an interference source of the second terminal device includes: receiving, by the second terminal on the time-frequency resource based on the seventh indication information and the identifier of the first network device, the pilot sequence sent by the first terminal device; and when the second terminal device determines that receive power at which the pilot sequence is received is greater than or equal to a threshold, determining, by the second terminal device, that the first terminal device is an interference source.

According to a thirteenth aspect, an embodiment of this application provides a network device, including: a sending unit, configured to send fifth indication information to the first terminal device, where the fifth indication information is used to instruct the first terminal device to generate a pilot sequence based on an identifier of the network device, and send the pilot sequence on a time-frequency resource, and the first terminal device is a terminal device within a coverage area of the network device; where the sending unit is further configured to send sixth indication information to a second network device, where the sixth indication information is used to instruct the second network device to trigger a second terminal device to: detect the pilot sequence on the time-frequency resource based on the identifier of the network device, and determine whether the first terminal device is an interference source of the second terminal device, and the second terminal device is a terminal device within a coverage area of the second network device.

In a possible design, the network device further includes a receiving unit, and the receiving unit is configured to receive interference source information sent by the second network device, where the interference source information is used to indicate that the first terminal device is an interference source of the second terminal device.

For technical effects of the network device provided in this embodiment of this application, refer to technical effects of the foregoing ninth aspect or each optional manner of the ninth aspect, and details are not described herein again.

According to a fourteenth aspect, an embodiment of this application provides a terminal device, including: a receiving unit, configured to receive fifth indication information sent by a first network device, where the fifth indication information is used to instruct the terminal device to generate a pilot sequence based on an identifier of the first network device, and send the pilot sequence on a time-frequency resource, and the terminal device is a terminal device within a coverage area of the first network device; a generation unit, configured to generate the pilot sequence based on the identifier of the first network device; and a sending unit, configured to send, on the time-frequency resource, the pilot sequence generated by the generation unit, where the pilot sequence is used by a second terminal device that receives the pilot sequence, to determine whether the terminal device is an interference source of the second terminal device, and the second terminal device is a terminal device within a coverage area of a second network device.

In a possible design, the sending unit is specifically configured to send the pilot sequence on the time-frequency resource in an extended cyclic prefix manner.

In a possible design, the sending unit is specifically configured to send the pilot sequence on the time-frequency resource by using transmit power of a physical uplink shared channel.

For technical effects of the terminal device provided in this embodiment of this application, refer to technical effects of the foregoing tenth aspect or each optional manner of the tenth aspect, and details are not described herein again.

According to a fifteenth aspect, an embodiment of this application provides a network device, including: a receiving unit, configured to receive sixth indication information sent by a first network device, where the sixth indication information is used to instruct the network device to trigger a second terminal device to: detect a pilot sequence on a time-frequency resource based on an identifier of the first network device, and determine whether a first terminal device is an interference source of the second terminal device, the pilot sequence is generated by the first terminal based on the identifier of the first network device, the second terminal device is a terminal device within a coverage area of the second network device, and the first terminal device is a terminal device within a coverage area of the first network device; and a sending unit, configured to send seventh indication information to the second terminal device, where the seventh indication information is used to instruct the second terminal to: detect the pilot sequence on the time-frequency resource based on the identifier of the first network device, and determine whether the first terminal device is an interference source of the second terminal device.

In a possible design, the receiving unit is further configured to receive eighth indication information sent by the second terminal, where the eighth indication information is used to indicate that the first terminal is an interference source of the second terminal; and the sending unit is further configured to send interference source information to the first network device based on the eighth indication information received by the receiving unit, to indicate, to the first network device, that the first terminal is an interference source of the second terminal.

For technical effects of the network device provided in this embodiment of this application, refer to technical effects of the foregoing eleventh aspect or each optional manner of the eleventh aspect, and details are not described herein again.

According to a sixteenth aspect, an embodiment of this application provides a terminal device, including: a receiving unit, configured to receive seventh indication information sent by a second network device, where the seventh indication information is used to instruct a detection unit to: detect a pilot sequence on a time-frequency resource based on an identifier of a first network device, and determine whether a first terminal device is an interference source of the terminal device, the pilot sequence is generated by the first terminal based on the identifier of the first network device, the terminal device is a terminal device within a coverage area of the second network device, and the first terminal device is a terminal device within a coverage area of the first network device; the detection unit, configured to: detect, on the time-frequency resource based on the seventh indication information and the identifier of the first network device, the pilot sequence sent by the first terminal device, and determine that the first terminal device is an interference source of the terminal device; and a sending unit, configured to send eighth indication information to the second network device, where the eighth indication information is used to indicate that the first terminal device is an interference source of the terminal device.

In a possible design, the detection unit is specifically configured to: receive, on the time-frequency resource based on the seventh indication information and the identifier of the first network device, the pilot sequence sent by the first terminal device; and when determining that receive power at which the pilot sequence is received is greater than or equal to a threshold, determine that the first terminal device is an interference source.

For technical effects of the terminal device provided in this embodiment of this application, refer to technical effects of the foregoing twelfth aspect or each optional manner of the twelfth aspect, and details are not described herein again.

According to a seventeenth aspect, an embodiment of this application provides a network device. The network device may implement a function performed by the network device in the embodiment described in the foregoing first aspect or ninth aspect. The function may be implemented by hardware, or may be implemented by executing corresponding software by hardware. The hardware or software includes one or more modules corresponding to the foregoing function.

In a possible design, the network device includes a processor and a transceiver. The processor is configured to support the network device in performing corresponding functions in the foregoing methods. The transceiver is configured to support communication between the network device and another network element. The network device may further include a memory. The memory is configured to be coupled to the processor, and stores a program instruction and data that are necessary for the network device.

According to an eighteenth aspect, an embodiment of this application provides a readable medium, including a computer-executable instruction. When a processor of a network device executes the computer-executable instruction, the network device performs the method for measuring interference between terminal devices according to the foregoing first aspect or any implementation of the first aspect, or performs the method for measuring interference between terminal devices according to the foregoing ninth aspect or any implementation of the ninth aspect.

For technical effects of the network device provided in this embodiment of this application, refer to technical effects of the foregoing first aspect or each optional manner of the first aspect, or refer to technical effects of the foregoing ninth aspect or each optional manner of the ninth aspect, and details are not described herein again.

According to a nineteenth aspect, an embodiment of this application provides a terminal device. The terminal device may implement a function performed by the terminal device in the method embodiment described in the foregoing second aspect or tenth aspect. The function may be implemented by hardware, or may be implemented by executing corresponding software by hardware. The hardware or software includes one or more modules corresponding to the foregoing function.

In a possible design, the terminal device includes a processor and a transceiver. The processor is configured to support the terminal device in performing corresponding functions in the foregoing methods. The transceiver is configured to support communication between the terminal device and another network element. The terminal device may further include a memory. The memory is configured to be coupled to the processor, and stores a program instruction and data that are necessary for the terminal device.

According to a twentieth aspect, an embodiment of this application provides a readable medium, including a computer-executable instruction. When a processor of a terminal device executes the computer-executable instruction, the terminal device performs the method for measuring interference between terminal devices according to the foregoing second aspect or any implementation of the second aspect, or performs the terminal-device-to-terminal-device interference measurement method according to the foregoing tenth aspect or any implementation of the tenth aspect.

For technical effects of the terminal device provided in this embodiment of this application, refer to technical effects of the foregoing second aspect or each optional manner of the second aspect, or refer to technical effects of the foregoing tenth aspect or each optional manner of the tenth aspect, and details are not described herein again.

According to a twenty-first aspect, an embodiment of this application provides a network device. The network device may implement a function performed by the network device in the method embodiment described in the foregoing third aspect or fourth aspect. The function may be implemented by hardware, or may be implemented by executing corresponding software by hardware. The hardware or software includes one or more modules corresponding to the foregoing function.

In a possible design, the network device includes a processor and a transceiver. The processor is configured to support the network device in performing corresponding functions in the foregoing methods. The transceiver is configured to support communication between the network device and another network element. The network device may further include a memory. The memory is configured to be coupled to the processor, and stores a program instruction and data that are necessary for the network device.

According to a twenty-second aspect, an embodiment of this application provides a readable medium, including a computer-executable instruction. When a processor of a network device executes the computer-executable instruction, the network device performs the method for measuring interference between terminal devices according to the foregoing third aspect or any implementation of the third aspect, or performs the method for measuring interference between terminal devices according to the foregoing eleventh aspect or any implementation of the eleventh aspect.

For technical effects of the network device provided in this embodiment of this application, refer to technical effects of the foregoing third aspect or each optional manner of the third aspect, or refer to technical effects of the foregoing eleventh aspect or each optional manner of the eleventh aspect, and details are not described herein again.

According to a twenty-third aspect, an embodiment of this application provides a terminal device. The terminal device may implement a function performed by the terminal device in the method embodiment described in the foregoing fourth aspect or twelfth aspect. The function may be implemented by hardware, or may be implemented by executing corresponding software by hardware. The hardware or software includes one or more modules corresponding to the foregoing function.

In a possible design, the terminal device includes a processor and a transceiver. The processor is configured to support the terminal device in performing corresponding functions in the foregoing methods. The transceiver is configured to support communication between the terminal device and another network element. The terminal device may further include a memory. The memory is configured to be coupled to the processor, and stores a program instruction and data that are necessary for the terminal device.

According to a twenty-fourth aspect, an embodiment of this application provides a readable medium, including a computer-executable instruction. When a processor of a terminal device executes the computer-executable instruction, the terminal device performs the method for measuring interference between terminal devices according to the foregoing fourth aspect or any implementation of the fourth aspect, or performs the method for measuring interference between terminal devices according to the foregoing twelfth aspect or any implementation of the twelfth aspect.

For technical effects of the terminal device provided in this embodiment of this application, refer to technical effects of the foregoing fourth aspect or each optional manner of the fourth aspect, or refer to technical effects of the foregoing twelfth aspect or each optional manner of the twelfth aspect, and details are not described herein again.

According to a twenty-fifth aspect, an embodiment of this application provides a communications system, including: the network device according to the fifth aspect or any possible design of the fifth aspect, the terminal device according to the sixth aspect or any possible design of the sixth aspect, the network device according to the seventh aspect or any possible design of the seventh aspect, and the terminal device according to the eighth aspect or any possible design of the eighth aspect; or the network device according to the thirteenth aspect or any possible design of the thirteenth aspect, the terminal device according to the fourteenth aspect or any possible design of the fourteenth aspect, the network device according to the fifteenth aspect or any possible design of the fifteenth aspect, and the terminal device according to the sixteenth aspect or any possible design of the sixteenth aspect; or the network device according to the seventeenth aspect or any possible design of the seventeenth aspect, the terminal device according to the nineteenth aspect or any possible design of the nineteenth aspect, the network device according to the twenty-first aspect or any possible design of the twenty-first aspect, and the terminal device according to the twenty-third aspect or any possible design of the twenty-third aspect.

### BRIEF DESCRIPTION OF DRAWINGS

FIG. 1 is a schematic architectural diagram of a communications system according to an embodiment of this application;
FIG. 2 is a first schematic structural diagram of a network device according to an embodiment of this application;
FIG. 3 is a first schematic structural diagram of a terminal device according to an embodiment of this application;
FIG. 4A and FIG. 4B are interaction diagrams of a method for measuring interference between terminal devices according to an embodiment of this application;
FIG. 5A and FIG. 5B are interaction diagrams of another method for measuring interference between terminal devices according to an embodiment of this application;
FIG. 6A is a first schematic structural diagram of a first network device according to an embodiment of this application;
FIG. 6B is a second schematic structural diagram of a first network device according to an embodiment of this application;
FIG. 6C is a third schematic structural diagram of a first network device according to an embodiment of this application;
FIG. 7A is a first schematic structural diagram of a first terminal device according to an embodiment of this application;
FIG. 7B is a second schematic structural diagram of a first terminal device according to an embodiment of this application;
FIG. 7C is a third schematic structural diagram of a first terminal device according to an embodiment of this application;
FIG. 8A is a first schematic structural diagram of a second network device according to an embodiment of this application;
FIG. 8B is a second schematic structural diagram of a second network device according to an embodiment of this application;
FIG. 8C is a third schematic structural diagram of a second network device according to an embodiment of this application;
FIG. 9A is a first schematic structural diagram of a second terminal device according to an embodiment of this application;
FIG. 9B is a second schematic structural diagram of a second terminal device according to an embodiment of this application; and
FIG. 9C is a third schematic structural diagram of a second terminal device according to an embodiment of this application.

### DESCRIPTION OF EMBODIMENTS

It should be noted that the terms "system" and "network" may be often used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In embodiments of this application, ordinal numbers such as "first", "second", "third", or "fourth" should be understood as being used merely for distinguishing, unless the ordinal numbers do mean order according to context. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

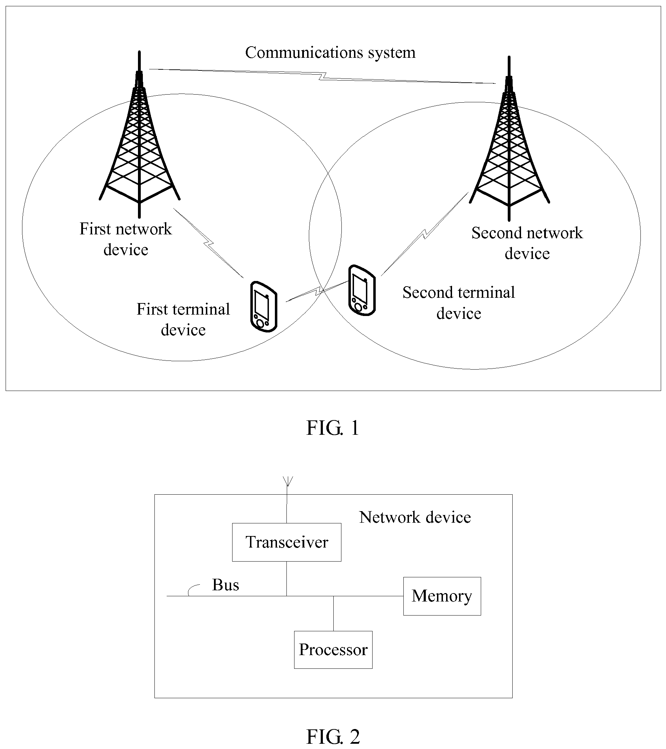

For example, a communications system to which a method for measuring interference between terminal devices provided in an embodiment of this application may be applied may be a communications system shown in FIG. 1, including a first network device, a first terminal device, a second network device, and a second terminal device. The first terminal device is a terminal device within a coverage area of the first network device, and the first network device serves the first terminal device. The second terminal device is a terminal device within a coverage area of the second network device, and the second network device serves the second terminal device.

The first network device and the second network device may be base stations, for example, an RNC in a 3G system, an eNodeB or a macro base station in LTE, or another transmission node with a wireless backhaul function, or the like.

FIG. 2 shows a network device according to an embodiment of this application, including a processor, a memory, a transceiver, and a bus.

The bus is configured to connect the processor, the memory, and the transceiver, and implement data transmission among the processor, the memory, and the transceiver. The transceiver receives and transmits data by using an antenna. The processor receives a command from the transceiver by using the bus, decrypts the received command, performs computation or data processing according to the decrypted command, and sends processed data from the transceiver to another device by using the bus. The memory includes a program module, a data module, and the like. The program module may include software, firmware, hardware, or at least two of the software, the firmware, and the hardware. The transceiver is configured to connect the network device to a network and network element nodes such as a network device and a terminal. For example, the transceiver may connect to another external network element node via the network device.

The first terminal device and the second terminal device may be UEs, including a portable, pocket-sized, handheld, computer built-in, or in-vehicle mobile apparatus, or a personal communications service (PCS, Personal Communications Service) phone, a notebook computer, a touchscreen computer, a cordless phone, a wireless local loop (WLL, Wireless Local Loop) station, a personal digital assistant (PDA, Personal Digital Assistant), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), or a user device (User Device).

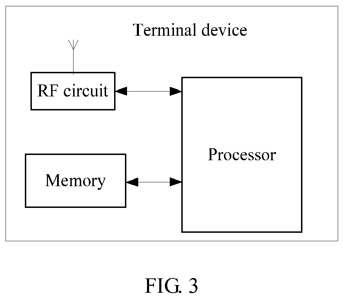

FIG. 3 shows a terminal device according to an embodiment of this application, including a processor, a memory, an RF circuit, or the like.

The processor is a control center of the terminal device, is connected to each part of the entire terminal device by using various interfaces and lines, and performs various functions of the terminal device and data processing by running or executing a software program and/or a module that is stored in the memory and by invoking data stored in the memory, so as to perform overall monitoring on the terminal device. The processor may include a digital signal processor device, a microprocessor device, an analog-to-digital converter, a digital-to-analog converter, and the like. These devices can perform control and signal processing functions of the terminal device based on capabilities of these devices. The RF circuit may be configured to receive and transmit information, and send received information to the processor for processing. Usually, the RF circuit includes but is not limited to an antenna, at least one amplifier, a transceiver, a coupler, an LNA (low noise amplifier, low noise amplifier), a duplexer, and the like, and communicate with a network and another device through wireless communication. Any communications standard or protocol may be used for the wireless communication, including but not limited to Global System for Mobile Communications (Global System for Mobile Communications, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA), LTE (Long Term Evolution, Long Term Evolution), Wi-Fi or low-power Wi-Fi, a WLAN technology, and the like.

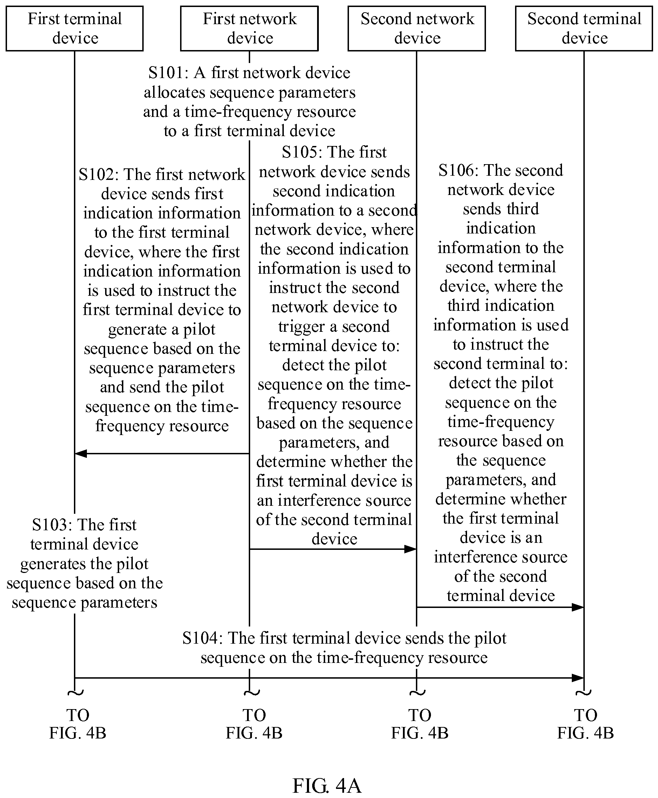

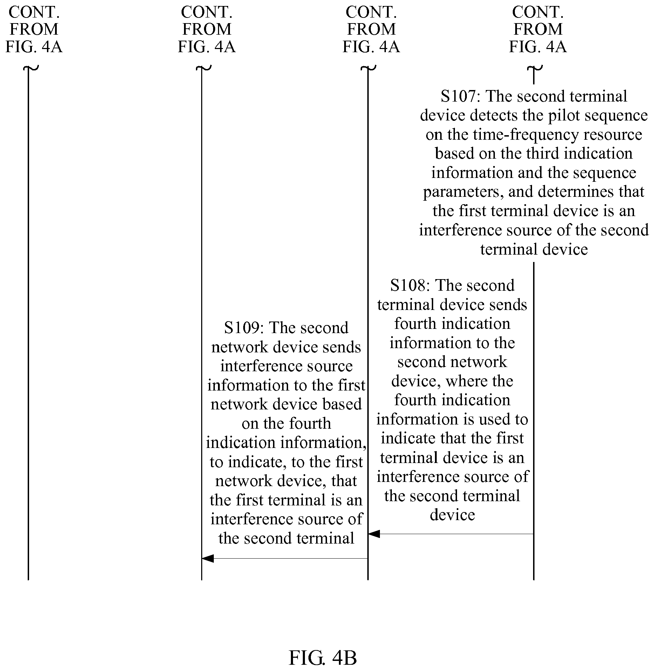

Based on the communications system shown in FIG. 1, as shown in FIG. 4A and FIG. 4B, an embodiment of this application provides a method for measuring interference between terminal devices. The method may include the following steps.

S101: A first network device allocates sequence parameters and information about time-frequency resource to a first terminal device, where the first terminal device is a terminal device within a coverage area of the first network device.

The first terminal device is a terminal device within the coverage area of the first network device, that is, is a terminal device served by the first network device.

Optionally, the first terminal device may be specifically a terminal device that is within the coverage area of the first network device and whose reference signal received power (Reference Signal Received Power, RSRP) detected by the first network device is lower than a preset first threshold. Specifically, the first network device sends a reference signal to terminal devices served by the first network device, and the terminal devices calculate RSRP after receiving the reference signals and send RSRP obtained through calculation to the first network device, so that the first network device determines a terminal device, as the first terminal device, that is corresponding to RSRP lower than the first threshold; or terminal devices served by the first network device may send reference signals to the first network device, so that the first network device may measure RSRP of received reference signals, and then determine a terminal device, as the first terminal device, that is corresponding to RSRP lower than the preset threshold. The first network device allocates the sequence parameters and the time-frequency resource to each first terminal device.

Further, in this embodiment of this application, the sequence parameters may include an identifier of the first network device and an identifier of the first terminal device. The identifier of the first terminal device is allocated by the first network device to the first terminal device, and may be specifically a number allocated by the first network device to the first terminal device, or a cyclic shift (cyclic shift) allocated by the first network device to the first terminal device, or may be a character that can uniquely represent the first terminal device and that is allocated by the first network device to the first terminal device, or the like. This is not limited in this embodiment of this application.

The time-frequency resource is a frequency-domain location and a time-domain location used to transmit a pilot sequence. It may be understood that the frequency-domain location includes a specific resource block, a specific subcarrier, and the like, and the time-domain location may include a subframe, a time-domain symbol, and the like.

S102: The first network device sends first indication information to the first terminal device, where the first indication information is used to instruct the first terminal device to generate a pilot sequence based on the sequence parameters and send the pilot sequence on the time-frequency resource.

The first indication information may be carried in downlink control information, or may be carried in radio resource control (Radio Resource Control, RRC) signaling.

In an example, the first indication information may carry the sequence parameters and information about the time-frequency resource. The information about the time-frequency resource is used to indicate the time-frequency resource. The information about the time-frequency resource may include an ID of a resource block, an ID of a subcarrier, a timing periodicity, a subframe offset within a cycle, an ID of an intra-subframe symbol (symbol), and the like. The first network device adds the sequence parameters and the information about the time-frequency resource to the first indication information, and sends the first indication information to the first terminal device, so that the first terminal device may obtain the sequence parameters and the information about the time-frequency resource directly from the first indication information.

Optionally, because the first network device is a network device serving the first terminal device, the first terminal device may have learned of the identifier of the first network device. Therefore, to save transmission resources used for transmitting the first indication information, the first network device may directly add the identifier allocated to the first terminal device and the information about the time-frequency resource to the first indication information, and send the first indication information to the first terminal device, so that the first terminal device can obtain the identifier allocated to the first terminal device and the information about the time-frequency resource from the first indication information.

In an example, a first table is maintained in the first network device, and the first terminal device has learned of the first table. The first table includes a plurality of groups that include fixed sequence parameters and fixed time-frequency resource information, and includes a first index parameter corresponding to each group that includes sequence parameters and time-frequency resource information.

For example, the foregoing first table may be shown in Table 1.

**Table 1**

| First index parameter | Sequence parameters | | Time-frequency resource information | | | | |
|---|---|---|---|---|---|---|---|
| | Identifier of a first terminal device | Identifier of a first network device | ID of a resource block | ID of a subcarrier | Timing periodicity | Subframe offset within a cycle | ID of an intra-subframe symbol |
| 1 | 1 | 2 | 0 | 0-5 | 10 | 2 | 13 |
| 2 | 2 | 2 | 0 | 6-11 | 10 | 2 | 12 |
| 3 | 3 | 2 | 1 | 0-5 | 10 | 2 | 11 |
| ... | ... | ... | ... | ... | ... | ... | ... |

Therefore, that a first network device allocates sequence parameters and information about time-frequency resource to a first terminal device may specifically include: determining, by the first network device for the first terminal device from the plurality of groups that include fixed sequence parameters and fixed time-frequency resource information, a group that includes sequence parameters and time-frequency resource information. For example, the first network device selects, for the first terminal device, sequence parameters and time-frequency resource information that are corresponding to a first index parameter 1. Further, the first network device may add the first index parameter 1 to the first indication information, and send the first indication information to the first terminal device, so that the first terminal device can obtain, based on the first index parameter 1 and from the first table, the sequence parameters and the time-frequency resource information that are selected by the first network device for the first terminal device.

Further, the first terminal device may receive the first table broadcast by the first network device, to obtain the first table, or in a process of performing information exchange with the first network device, the first terminal device may receive the first table sent by the first network device to the first terminal device, to obtain the first table. It may be understood that because the first terminal device may have learned of the identifier of the first network device, the first network device may not add a specific value in an "Identifier of a first network device" column to the first table when sending the first table, so as to save transmission resources used for transmitting the first table.

S103: The first terminal device generates the pilot sequence based on the sequence parameters.

In this embodiment of this application, the first terminal may generate a pilot sequence of a preset type based on the sequence parameters. For example, the first terminal may generate a pseudo-random sequence (Pseudo-Random sequence), a ZC (Zadoff-Chu) sequence, or the like based on the sequence parameters.

Optionally, if the first terminal device needs to send the pilot sequence in a multi-port code division orthogonal manner, the sequence parameters further need to include a codebook allocated by the first network device to the first terminal device, so that the first terminal device can perform mapping to a different antenna port according to the corresponding codebook.

Specifically, for a manner in which the first terminal generates the pilot sequence based on the sequence parameters, refer to a manner in the prior art in which a terminal device generates a pilot sequence, and details are not described herein.

S104: The first terminal device sends the pilot sequence on the time-frequency resource.

In this embodiment of this application, the pilot sequence is used by a second terminal device that receives the pilot sequence on the time-frequency resource, to determine whether the first terminal device is an interference source of the second terminal device. The second terminal device is a terminal device within a coverage area of a second network device. In an example, the second terminal device may be specifically a terminal device that is within the coverage area of the second network device and whose RSRP detected by the first network device is lower than a preset second threshold.

Specifically, the first terminal device may send the pilot sequence on the time-frequency resource in an extended cyclic prefix (extended Cyclic Prefix, extended CP) manner. It may be understood that sending the pilot sequence in the extended CP manner can reduce an impact of multipath transmission that may occur in a transmission process of the pilot sequence.

Further, when transmitting uplink data, the first terminal sends the uplink data by using transmit power of a physical uplink shared channel. Therefore, to enable the second terminal device to determine whether the first terminal, when sending the uplink data, causes interference to downlink data of the second terminal, the first terminal device may also send the pilot sequence by using the transmit power when sending the pilot sequence on the time-frequency resource, so as to improve accuracy in measuring, by the second terminal device, whether the first terminal device is an interference source of the second terminal device.

S105: The first network device sends second indication information to a second network device, where the second indication information is used to instruct the second network device to trigger a second terminal device to: detect the pilot sequence on the time-frequency resource based on the sequence parameters, and determine whether the first terminal device is an interference source of the second terminal device.

Specifically, the first network device may transmit the second indication information by using a wireless backhaul (backhaul) link between the first network device and the second network device, or may transmit the second indication information by using an X2 interface between the first network device and the second network device. This is not limited in this embodiment of this application.

In an example, the second indication information may carry the sequence parameters and the information about the time-frequency resource, or may carry a first index parameter corresponding to both the information about the time-frequency resource and the sequence parameters.

It may be understood that if the second network device also stores the first table in advance, the first network device may also directly add, to the second indication information, the first index parameter corresponding to both the sequence parameters and the information about the time-frequency resource, and send the second indication information to the second network device, so that after receiving interference measurement information, the second network device can search for, in the first table, the information about the time-frequency resource and the sequence parameters that are corresponding to the first index parameter, and further instruct, according to an instruction of the second indication information, the second terminal device to: detect the pilot sequence on the time-frequency resource based on the sequence parameters, and determine whether the first terminal device is an interference source of the second terminal device.

It should be noted that when the first network device determines that there are a plurality of first terminal devices, the first network device may send second indication information corresponding to each first terminal device to the second network device, or may add sequence parameters and time-frequency resource information that are corresponding to each first terminal device, or a first index parameter corresponding to each first terminal device to a piece of second indication information, and send the second indication information to the second network device.

S106: The second network device sends third indication information to the second terminal device, where the third indication information is used to instruct the second terminal to: detect the pilot sequence on the time-frequency resource based on the sequence parameters, and determine whether the first terminal device is an interference source of the second terminal device.

The third indication information may be carried in downlink control information, or may be carried in RRC signaling.

In an example, the second network device may add the sequence parameters and the information about the time-frequency resource to the third indication information, so that the second terminal device can obtain the sequence parameters and the information about the time-frequency resource from the third indication information, further to determine the sequence parameters and the time-frequency resource.

In an example, a second table is maintained in the second network device. The second table includes a plurality of groups that include fixed sequence parameters and fixed time-frequency resource information, and includes a second index parameter corresponding to each group that includes sequence parameters and time-frequency resource information. In this embodiment of this application, sequence parameters and time-frequency resource information in first tables of a plurality of first network devices are collected, and a unique second index parameter is set for each group that includes sequence parameters and information about time-frequency resource, to form the second table.

For example, the second table may be shown in Table 2. Second index parameters 1-3 are corresponding to a plurality of groups that include fixed sequence parameters and fixed time-frequency resource information and that are of a first network device with an identifier of 1. Second index parameters 11-13 are corresponding to a plurality of groups that include fixed sequence parameters and fixed time-frequency resource information and that are of a first network device with an identifier of 2.

**Table 2**

| Second index parameter | Sequence parameters | | Time-frequency resource information | | | | |
|---|---|---|---|---|---|---|---|
| | Identifier of a first terminal | Identifier of a first network device | ID of a resource block | ID of a subcarrier | Timing periodicity | Subframe offset within a cycle | ID of an intra-subframe symbol |
| 1 | 1 | 1 | 0 | 0-5 | 10 | 2 | 13 |
| 2 | 2 | 1 | 0 | 6-11 | 10 | 2 | 12 |
| 3 | 3 | 1 | 1 | 0-5 | 10 | 2 | 11 |
| ... | ... | ... | ... | ... | ... | ... | ... |
| 11 | 1 | 2 | 10 | 0-5 | 10 | 2 | 13 |
| 12 | 2 | 2 | 10 | 6-11 | 10 | 2 | 12 |
| 13 | 3 | 2 | 11 | 0-5 | 10 | 2 | 11 |
| ... | ... | ... | ... | ... | ... | ... | ... |

When the second terminal device has obtained the second table, the second network device may add, to the third indication information, a second index parameter corresponding to both the sequence parameters and the information about the time-frequency resource allocated by the first network device to the first terminal device, so that after receiving the third indication information, the second terminal device can obtain, from the second table, the sequence parameters and the information about the time-frequency resource that are corresponding to the second index parameter, so as to determine the sequence parameters and the time-frequency resource, and when subsequently determining that the first terminal device is an interference source, can directly use the second index parameter to uniquely indicate the first terminal device.

Optionally, when the second terminal device does not obtain the second table, the second network device may add, to the third indication information, the information about the time-frequency resource and the sequence parameters, and a second index parameter corresponding to both the information about the time-frequency resource and the sequence parameters, so that the second terminal device can obtain the sequence parameters and the information about the time-frequency resource from the third indication information, and when subsequently determining that the first terminal device is an interference source, can directly use the second index parameter to uniquely indicate the first terminal device.

S107: The second terminal device detects the pilot sequence on the time-frequency resource based on the third indication information and the sequence parameters, and determines that the first terminal device is an interference source of the second terminal device.

Specifically, after determining the time-frequency resource and the sequence parameters, the second terminal device attempts to receive the pilot sequence on the time-frequency resource based on the sequence parameters.

For example, the second terminal may generate a pilot sequence based on the sequence parameters, and then attempt to receive, on the time-frequency resource, a pilot sequence that is the same as the pilot sequence generated by the second terminal. If the second terminal can receive, on the time-frequency resource, a pilot sequence that is the same as the pilot sequence generated by the second terminal, it indicates that the second terminal can receive the pilot sequence sent by the first terminal.

In an optional embodiment, when the second terminal receives the pilot sequence sent by the first terminal, it is considered that the first terminal device is an interference source of the second terminal device; and/or when the second terminal does not receive the pilot sequence sent by the first terminal, it is considered that the first terminal device is not an interference source of the second terminal device. Further, the second terminal device may detect receive power of the received pilot sequence that is sent by the first terminal, to determine whether the first terminal device is an interference source of the second terminal device.

Specifically, when the second terminal device determines that the receive power at which the pilot sequence sent by the first terminal is received is greater than or equal to a threshold, the second terminal device determines that the first terminal device is an interference source. The threshold may be preset in the second terminal device, or may be notified by the second network device to the second terminal device by using a system message, RRC signaling, or downlink control information.

In an optional embodiment, that the second terminal device may detect receive power of the received pilot sequence that is sent by the first terminal device, to determine whether the first terminal device is an interference source of the second terminal device may alternatively be: The second terminal device detects receive power of the received pilot sequence that is sent by the first terminal device. For example, when the receive power is detected, a purpose of determining whether the first terminal device is an interference source of the second terminal device is implemented. For example, when the receive power is not detected, a purpose of determining whether the first terminal device is an interference source of the second terminal device is also implemented.

S108: The second terminal device sends fourth indication information to the second network device, where the fourth indication information is used to indicate that the first terminal device is an interference source of the second terminal device.

When the second terminal device determines that the first terminal device is an interference source, the second terminal may send the fourth indication information to the second network device, to indicate, to the second network device, that the first terminal device is an interference source of the second terminal device.

For example, the fourth indication information is carried in uplink control information, and may be transmitted in a physical uplink control channel (Physical Uplink Control Channel, PUCCH), or may be transmitted in a physical downlink shared channel (Physical Downlink Shared Channel, PDSCH).

In an example, the fourth indication information may include the identifier of the first network device and the identifier of the first terminal device. In this embodiment of this application, the identifier of the first network device and the identifier of the first terminal device can uniquely indicate the first terminal device. Therefore, the second terminal device may add the identifier of the first network device and the identifier of the first terminal device to the fourth indication information, to indicate, to the second network device, that the first terminal device is an interference source of the second terminal device.

In an example, when the third indication information received by the second terminal device carries the second index parameter corresponding to both the sequence parameters and the time-frequency resource, because the second index parameter can also uniquely indicate the first terminal device, the second terminal device may also add the second index parameter to the fourth indication information, to indicate, to the second network device, that the first terminal device is an interference source of the second terminal device.

In an example, the fourth indication information includes the receive power that is of the pilot sequence sent by the first terminal device and that is detected by the second terminal device, so that the fourth indication information can indicate, to the second network device, that the first terminal device is an interference source of the second terminal device. Alternatively, the fourth indication information does not include the receive power that is of the pilot sequence sent by the first terminal device and that is detected by the second terminal device, so that the fourth indication information can indicate, to the second network device, that the first terminal device is not an interference source of the second terminal device.

S109: The second network device sends interference source information to the first network device based on the fourth indication information, to indicate, to the first network device, that the first terminal is an interference source of the second terminal.

The second network device may transmit the second indication information by using a wireless backhaul link between the second network device and the first network device, or may transmit the interference source information by using an X2 interface between the second network device and the first network device. This is not limited in this embodiment of this application.

In this embodiment of this application, after determining, based on the fourth indication information, that the first terminal is an interference source of the second terminal, the second network device may add the identifier of the first terminal and an identifier of the second terminal to the interference source information, and send the interference source information to the first network device. For the first network device, the identifier of the first terminal can uniquely indicate the first terminal. Therefore, after receiving the interference source information, the first network device can determine, based on an indication of the interference source information, that the first terminal indicated by the identifier of the first terminal is an interference source of the second terminal indicated by the identifier of the second terminal.

Optionally, the second network device may alternatively add the identifier of the second terminal and the first index parameter corresponding to the first terminal to the interference source information, and send the interference source information to the first network device. For the first network device, the first index parameter can also uniquely indicate the first terminal. Therefore, after receiving the interference source information, the first network device can also determine, based on an indication of the interference source information, that the first terminal indicated by the first index parameter is an interference source of the second terminal indicated by the identifier of the second terminal.

It may be understood that in this embodiment of this application, after the first network device and the second network device determine that the first terminal is an interference source of the second terminal, when the first network device schedules the first terminal device for data transmission, or when the second network device schedules the second terminal device for data transmission, the first network device and the second network device may negotiate with each other, to avoid a case in which, of the first terminal device and the second terminal device, one transmits uplink data and the other transmit downlink data, thereby preventing the first terminal device from causing interference to downlink data of the second terminal device, and also preventing the second terminal device from causing interference to downlink data of the first terminal device.

It should be noted that in this embodiment of this application, a step of determining whether the first terminal device is an interference source of the second terminal device may be performed by at least one of the first network device, the second network device, and the second terminal device. For example, the foregoing step S106 may include: the second network device sends the third indication information to the second terminal device, where the third indication information is used to instruct the second terminal device to detect, on the time-frequency resource based on the sequence parameters, the pilot sequence; and further in the foregoing step S108, the second network device determines, based on the fourth indication information returned by the second terminal device, whether the first terminal device is an interference source of the second terminal device, where the fourth indication information may include, for example, the receive power described above, or may include a detection result obtained by the second terminal device on the time-frequency resource. For example, the foregoing step S109 may include: the second network device forwards the fourth indication information to the first network device, where the fourth indication information may include, for example, the receive power described above, or may include a detection result obtained by the second terminal device on the time-frequency resource; and further, the first network device determines, based on the fourth indication information forwarded by the second network device, whether the first terminal device is an interference source of the second terminal device.

According to the method provided in this embodiment of this application, a network device can learn of an interference source of a terminal device, so that when scheduling the terminal device for downlink data transmission, the network device can prevent, by performing coordinated scheduling with a network device serving the interference source, the interference source of the terminal device from performing uplink data transmission when the terminal device performs downlink data transmission, further preventing the interference source from causing interference to downlink data of the terminal device.

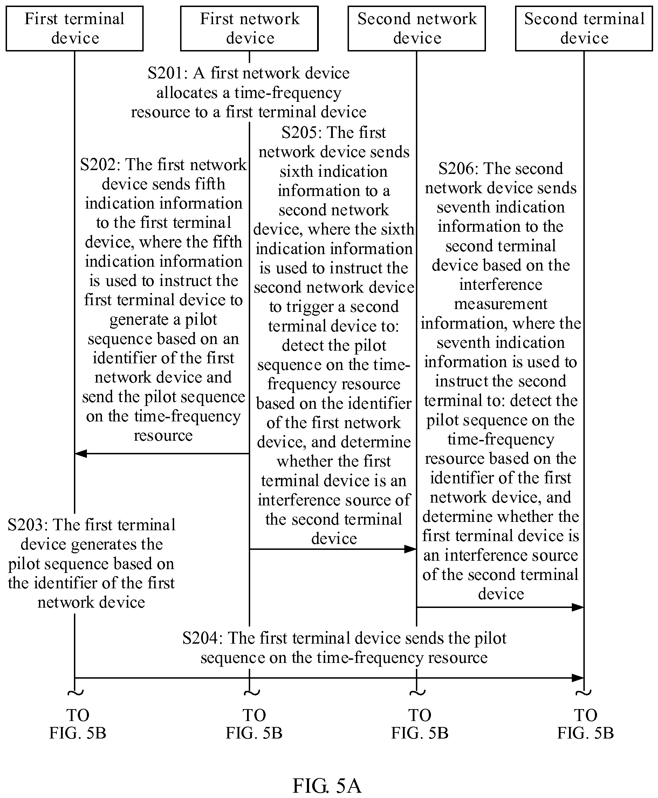

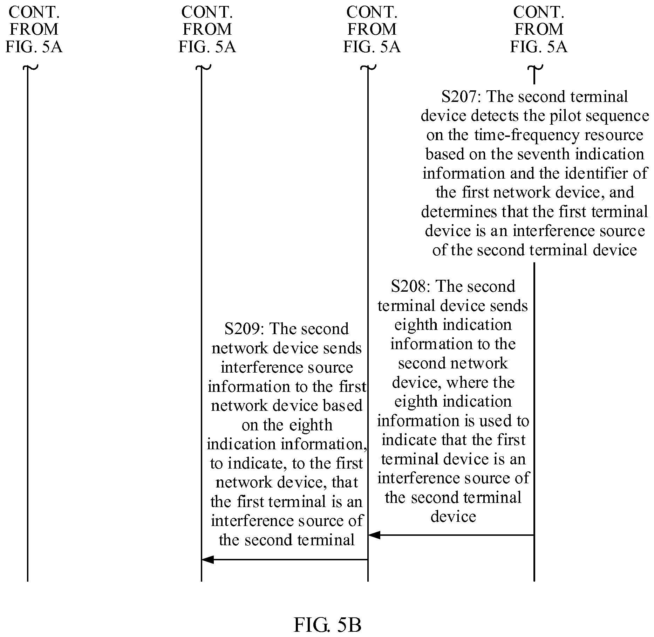

Optionally, based on the communications system shown in FIG. 1, as shown in FIG. 5A and FIG. 5B, an embodiment of this application provides another method for measuring interference between terminal devices. The method may include the following steps.

S201: A first network device allocates a time-frequency resource to a first terminal device.

S202: The first network device sends fifth indication information to the first terminal device, where the fifth indication information is used to instruct the first terminal device to generate a pilot sequence based on an identifier of the first network device, and send the pilot sequence on the time-frequency resource.

In an example, the fifth indication information may carry information about the time-frequency resource, so that the first terminal device can obtain the information about the time-frequency resource directly from the fifth indication information.

For specific content of the information about the time-frequency resource, refer to a description in S102 in the embodiment shown in FIG. 4A, and details are not described herein again.

In an example, a third table is maintained in the first network device, and the first terminal device has learned of the third table. The third table includes a plurality of groups of fixed time-frequency resource information, and includes a third index parameter corresponding to each group of time-frequency resource information.

For example, the foregoing third table may be shown in Table 3.

**Table 3**

| Third index parameter | Time-frequency resource information | | | | |
|---|---|---|---|---|---|
| | ID of a resource block | ID of a subcarrier | Timing periodicity | Subframe offset within a cycle | ID of an intra-subframe symbol |
| 1 | 0 | 0-5 | 10 | 2 | 13 |
| 2 | 0 | 6-11 | 10 | 2 | 12 |
| 3 | 1 | 0-5 | 10 | 2 | 11 |
| ... | ... | ... | ... | ... | ... |

Therefore, that a first network device allocates a time-frequency resource to a first terminal device may specifically include: determining, by the first network device for the first terminal device, a group of time-frequency resource information from the plurality of groups of fixed time-frequency resource information. For example, the first network device selects time-frequency resource information corresponding to a third index parameter 1 for the first terminal device. Further, the first network device may add the third index parameter 1 to the fifth indication information, and send the fifth indication information to the first terminal device, so that the first terminal device can obtain, based on the third index parameter 1 and from the third table, the time-frequency resource information selected by the first network device for the first terminal device.

Further, a manner in which the first terminal device obtains the third table is the same as a manner in which the first terminal device obtains the first table, and details are not described herein again.

S203: The first terminal device generates the pilot sequence based on the identifier of the first network device.

The pilot sequence may be a pseudo-random sequence, a ZC (Zadoff-Chu) sequence, or the like. For a manner in which the first terminal generates the pilot sequence based on the identifier of the first network device, refer to a manner of generating a pilot sequence by a terminal device in the prior art, and details are not described herein.

S204: The first terminal device sends the pilot sequence on the time-frequency resource.

In this embodiment of this application, the pilot sequence is used by a second terminal device that receives the pilot sequence on the time-frequency resource, to determine whether the first terminal device is an interference source of the second terminal device.

It should be noted that because the first network device schedules one terminal device on one time-frequency resource to send a pilot sequence, the first terminal device that performs transmission on the time-frequency resource is unique, that is, if the second terminal device can detect the pilot sequence on the time-frequency resource based on the identifier of the first network device, the pilot sequence is sent by the first terminal device.

Further, for a specific manner in which the first terminal device sends the pilot sequence on the time-frequency resource in this embodiment of this application, refer to a detailed description of S104 in the embodiment shown in FIG. 4A, and details are not described herein again.

S205: The first network device sends sixth indication information to a second network device, where the sixth indication information is used to instruct the second network device to trigger a second terminal device to: detect the pilot sequence on the time-frequency resource based on the identifier of the first network device, and determine whether the first terminal device is an interference source of the second terminal device.

In an example, the sixth indication information may carry the information about the time-frequency resource, or may carry a third index parameter corresponding to the information about the time-frequency resource.

It may be understood that if the second network device also stores the third table in advance, the first network device may also directly add the third index parameter corresponding to the time-frequency resource to the sixth indication information, and send the sixth indication information to the second network device, so that after receiving the sixth indication information, the second network device can search for, in the third table, the information about the time-frequency resource corresponding to the third index parameter, and further instruct, based on an indication of the sixth indication information, the second terminal device to: detect the pilot sequence on the time-frequency resource based on the identifier of the first network device, and determine whether the first terminal device is an interference source of the second terminal device.

It should be noted that when the first network device determines that there are a plurality of first terminal devices, the first network device may send sixth indication information corresponding to each first terminal device to the second network device, or may add time-frequency resource information corresponding to each first terminal device, or a third index parameter corresponding to each first terminal device to a piece of sixth indication information, and send the sixth indication information to the second network device.

S206: The second network device sends seventh indication information to the second terminal device based on the sixth indication information, where the seventh indication information is used to instruct the second terminal to: detect the pilot sequence on the time-frequency resource based on the identifier of the first network device, and determine whether the first terminal device is an interference source of the second terminal device.

In an example, the second network device may add the identifier of the first network device and the information about the time-frequency resource to the seventh indication information, so that the second terminal device can obtain the identifier of the first network device and the information about the time-frequency resource from the seventh indication information, further to determine the identifier of the first network device and the time-frequency resource.

In an example, a fourth table is maintained in the second network device. The fourth table includes a plurality of groups that include a fixed identifier of a first network device and fixed time-frequency resource information, and includes a fourth index parameter corresponding to each group that includes an identifier of a first network device and time-frequency resource information. In this embodiment of this application, time-frequency resource information and identities of corresponding first network devices in third tables of a plurality of first network devices are collected, and a unique fourth index parameter is set for each group that includes an identifier of a first network device and information about time-frequency resource, to form the fourth table.

For example, the fourth table may be shown in Table 4. Fourth index parameters 1-3 are corresponding to a plurality of groups of fixed time-frequency resource information of a first network device with an identifier of 1. Fourth index parameters 11-13 are corresponding to a plurality of groups of fixed time-frequency resource information of a first network device with an identifier of 2.

**Table 4**

| Fourth index parameter | Identifier of a first network device | Time-frequency resource information | | | | |
|---|---|---|---|---|---|---|
| | | ID of a resource block | ID of a subcarrier | Timing periodicity | Subframe offset within a cycle | ID of an intra-subframe symbol |
| 1 | 1 | 0 | 0-5 | 10 | 2 | 13 |
| 2 | 1 | 0 | 6-11 | 10 | 2 | 12 |
| 3 | 1 | 1 | 0-5 | 10 | 2 | 11 |
| ... | ... | ... | ... | ... | ... | ... |
| 11 | 2 | 10 | 0-5 | 10 | 2 | 13 |
| 12 | 2 | 10 | 6-11 | 10 | 2 | 12 |
| 13 | 2 | 11 | 0-5 | 10 | 2 | 11 |
| ... | ... | ... | ... | ... | ... | ... |

When the second terminal device has obtained the fourth table, the second network device may add, to the seventh indication information, a fourth index parameter corresponding to the information about the time-frequency resource allocated by the first network device to the first terminal device, so that after receiving the seventh indication information, the second terminal device can obtain, from the fourth table, the identifier of the first network device and the information about the time-frequency resource that are corresponding to the fourth index parameter, so as to determine the identifier of the first network device and the time-frequency resource.

Optionally, when the second terminal device does not obtain the fourth table, the second network device may add, to the seventh indication information, the information about the time-frequency resource and the identifier of the first network device, and a fourth index parameter corresponding to both the information about the time-frequency resource and the identifier of the first network device, so that the second terminal device can obtain the identifier of the first network device and the information about the time-frequency resource from the seventh indication information, and when subsequently determining that the first terminal device is an interference source, can directly use the fourth index parameter to uniquely indicate the first terminal device.

S207: The second terminal device detects the pilot sequence on the time-frequency resource based on the seventh indication information and the identifier of the first network device, and determines that the first terminal device is an interference source of the second terminal device.

Specifically, after the second terminal device determines the time-frequency resource, the second terminal device may attempt to receive the pilot sequence on the time-frequency resource based on the identifier of the first network device. When the second terminal device determines that the pilot sequence sent by the first terminal is received and that receive power is greater than or equal to a threshold, the second terminal device can determine that the first terminal device is an interference source.

Specifically, for a manner in which the second terminal device attempts to receive the pilot sequence on the time-frequency resource based on the identifier of the first network device, refer to a description in S107 in the embodiment shown in FIG. 4B, and details are not described herein again.

S208: The second terminal device sends eighth indication information to the second network device, where the eighth indication information is used to indicate that the first terminal device is an interference source of the second terminal device.

When the second terminal device determines that the first terminal device is an interference source, the second terminal may send the eighth indication information to the second network device, to indicate, to the second network device, that the first terminal device is an interference source of the second terminal device.

In an example, the eighth indication information may include the identifier of the first network device and the information about the time-frequency resource. In this embodiment of this application, because the first network device schedules, on the time-frequency resource, only the first terminal device to transmit the pilot sequence, the identifier of the first network device and the information about the time-frequency resource can uniquely indicate the first terminal device. Therefore, the second terminal device may add the identifier of the first network device and the information about the time-frequency resource to the eighth indication information, to indicate, to the second network device, that the first terminal device indicated by the identifier of the first network device and the information about the time-frequency resource is an interference source of the second terminal device.

In an example, when the seventh indication information received by the second terminal device carries the fourth index parameter corresponding to both the identifier of the first network device and the time-frequency resource, because the fourth index parameter can also uniquely indicate the first terminal device, the second terminal device may also add the fourth index parameter to the eighth indication information, to indicate, to the second network device, that the first terminal device is an interference source of the second terminal device.

S209: The second network device sends interference source information to the first network device based on the eighth indication information, to indicate, to the first network device, that the first terminal is an interference source of the second terminal.

In this embodiment of this application, after determining, based on the eighth indication information, that the first terminal device is an interference source of the second terminal, the second network device may add the information about the time-frequency resource and an identifier of the second terminal to the interference source information, and send the interference source information to the first network device. For the first network device, the information about the time-frequency resource allocated by the first network device to the first terminal device can uniquely indicate the first terminal. Therefore, after receiving the interference source information, the first network device can determine, based on an indication of the interference source information, that the first terminal device indicated by the information about the time-frequency resource is an interference source of the second terminal device indicated by the identifier of the second terminal device.

Optionally, the second network device may alternatively add the identifier of the second terminal device and the third index parameter corresponding to the first terminal device to the interference source information, and send the interference source information to the first network device. For the first network device, the third index parameter can also uniquely indicate the first terminal device. Therefore, after receiving the interference source information, the first network device can also determine, based on an indication of the interference source information, that the first terminal device indicated by the third index parameter is an interference source of the second terminal device indicated by the identifier of the second terminal device.

According to the method provided in this embodiment of this application, a network device can learn of an interference source of a terminal device, so that when scheduling the terminal device for downlink data transmission, the network device can prevent, by performing coordinated scheduling with a network device serving the interference source, the interference source of the terminal device from performing uplink data transmission when the terminal device performs downlink data transmission, further preventing the interference source from causing interference to downlink data of the terminal device.

The foregoing describes the solutions provided in the embodiments of this application mainly from a perspective of interaction between network elements. It may be understood that to implement the foregoing functions, the network elements, for example, the first network device, the first terminal device, the second network device, or the second terminal device, include a corresponding hardware structure and/or a software module that are/is used to perform the functions. A person of ordinary skill in the art should easily be aware that, in combination with the examples described in the embodiments disclosed in this specification, units and algorithms steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional module division may be performed on the first network device, the first terminal device, the second network device, the second terminal device, and the like based on the foregoing method examples. For example, functional modules may be designed based on functions, or two or more functions may be integrated into one processing module. The integrated module may be implemented in a form of hardware, or may be implemented in a form of a software functional module. It should be noted that the module division in the embodiments of this application is an example, and is merely logical function division and may be other division in actual implementation.

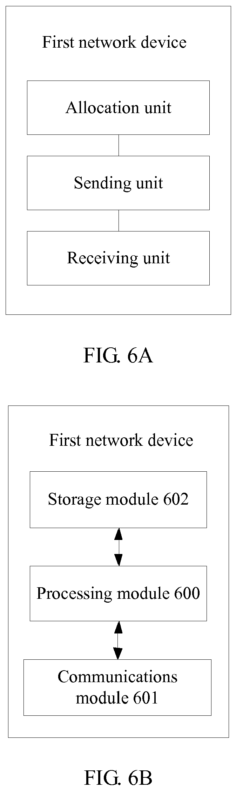

When functional modules are designed based on functions, FIG. 6A is a possible schematic structural diagram of the first network device in the foregoing embodiments. The first network device includes an allocation unit, a sending unit, and a receiving unit. The allocation unit is configured to support the first network device in performing the process S101 shown in FIG. 4A and the process S201 shown in FIG. 5A. The sending unit is configured to support the first network device in performing the processes S102 and S105 shown in FIG. 4A and the processes S202 and S205 shown in FIG. 5A. The receiving unit is configured to support the first network device in performing the process S109 shown in FIG. 4B and the process S209 shown in FIG. 5B. All related content of steps in the foregoing method embodiments may be cited as function descriptions of corresponding functional modules, and details are not described herein again.

When an integrated unit is used, FIG. 6B is a possible schematic structural diagram of the first network device in the foregoing embodiments. The first network device includes a processing module 600 and a communications module 601. The processing module 600 is configured to control and manage an action of the first network device. For example, the processing module 600 is configured to support the first network device in performing the processes S101, S102, S105, and S109 shown in FIG. 4A and FIG. 4B, the processes S201, S202, S205, and S209 shown in FIG. 5A and FIG. 5B, and/or another process of the technology described in this specification. The communications module 601 is configured to support communication between the first network device and another network entity, for example, communication between the first network device and a functional module or a network entity shown in FIG. 1. The first network device may further include a storage module 602, configured to store program code and data of the first network device.

The processing module 600 may be a processor or a controller, for example, a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logic device, a transistor logic device, a hardware component, or a combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications module 601 may be a transceiver, a transceiver circuit, or the like. The storage module 602 may be a memory.

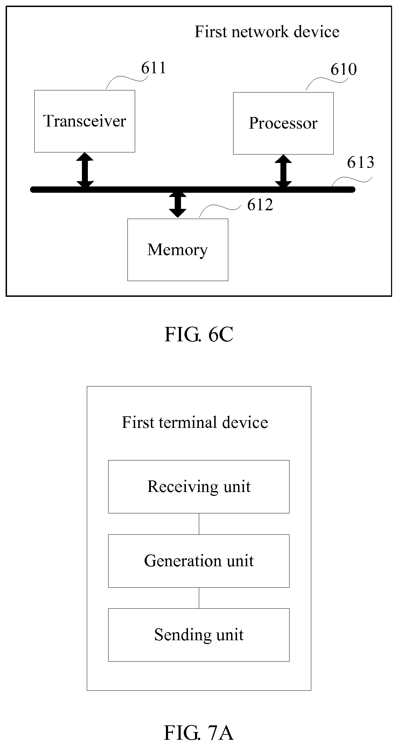

When the processing module 600 is a processor, the communications module 601 is a transceiver, and the storage module 602 is a memory, the first network device in the embodiments of this application may be a first network device shown in FIG. 6C.

Referring to FIG. 6C, the first network device includes a processor 610, a transceiver 611, a memory 612, and a bus 613. The transceiver 611, the processor 610, and the memory 612 are connected to each other by using the bus 613. The bus 613 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 6C, but this does not mean that there is only one bus or only one type of bus.

When functional modules are designed based on functions, FIG. 7A is a possible schematic structural diagram of the first terminal device in the foregoing embodiments. The first terminal device includes a receiving unit, a generation unit, and a sending unit. The receiving unit is configured to support the first terminal device in performing the process S102 shown in FIG. 4A and the process S202 shown in FIG. 5A. The generation unit is configured to support the first terminal device in performing the process S103 shown in FIG. 4A and the process S203 shown in FIG. 5A. The sending unit is configured to support the first terminal device in performing the process S104 shown in FIG. 4A and the process S204 shown in FIG. 5A. All related content of steps in the foregoing method embodiments may be cited as function descriptions of corresponding functional modules, and details are not described herein again.

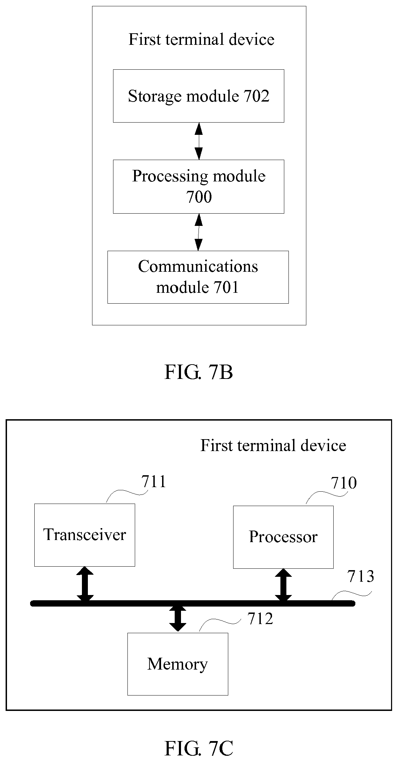

When an integrated unit is used, FIG. 7B is a possible schematic structural diagram of the first terminal device in the foregoing embodiments. The first terminal device includes a processing module 700 and a communications module 701. The processing module 700 is configured to control and manage an action of the first terminal device. For example, the processing module 700 is configured to support the first terminal device in performing the processes S102, S103, and S104 shown in FIG. 4A, the processes S202, 203, and S204 shown in FIG. 5A, and/or another process of the technology described in this specification. The communications module 701 is configured to support communication between the first terminal device and another network entity, for example, communication between the first terminal device and a functional module or a network entity shown in FIG. 1. The first terminal device may further include a storage module 702, configured to store program code and data of the first terminal device.

The processing module 700 may be a processor or a controller, for example, a CPU, a general-purpose processor, a DSP, an ASIC, an FPGA, or another programmable logic device, a transistor logic device, a hardware component, or a combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications module 701 may be a transceiver, a transceiver circuit, or the like. The storage module 702 may be a memory.

When the processing module 700 is a processor, the communications module 701 is a transceiver, and the storage module 702 is a memory, the first terminal device in the embodiments of this application may be a first terminal device shown in FIG. 7C.

Referring to FIG. 7C, the first terminal device includes a processor 710, a transceiver 711, a memory 712, and a bus 713. The transceiver 711, the processor 710, and the memory 712 are connected to each other by using the bus 713. The bus 713 may be a PCI bus, an EISA bus, or the like. The bus may be classified into an address bus, a data bus, a control bus, and the like. For ease of representation, only one thick line is used to represent the bus in FIG. 7C, but this does not mean that there is only one bus or only one type of bus.

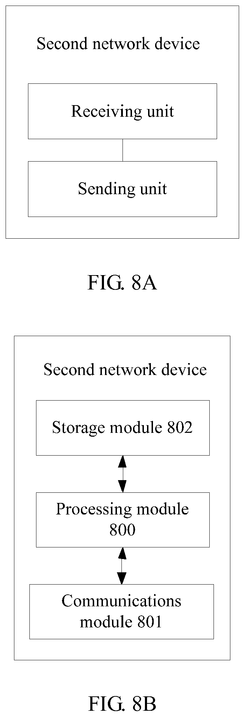

When functional modules are designed based on functions, FIG. 8A is a possible schematic structural diagram of the second network device in the foregoing embodiments. The second network device includes a receiving unit and a sending unit. The receiving unit is configured to support the second network device in performing the processes S105 and S108 shown in FIG. 4A and FIG. 4B and the processes S205 and S208 shown in FIG. 5A and FIG. 5B. The sending unit is configured to support the second network device in performing the processes S106 shown in FIG. 4A and FIG. 4B and the processes S206 shown in FIG. 5A and FIG. 5B. All related content of steps in the foregoing method embodiments may be cited as function descriptions of corresponding functional modules, and details are not described herein again.

When an integrated unit is used, FIG. 8B is a possible schematic structural diagram of the second network device in the foregoing embodiments. The second network device includes a processing module 800 and a communications module 801. The processing module 800 is configured to control and manage an action of the second network device. For example, the processing module 800 is configured to support the second network device in performing the processes S105, S106, S108, and S109 shown in FIG. 4A and FIG. 4B, the processes S205, S206, S208, and S209 shown in FIG. 5A and FIG. 5B, and/or another process of the technology described in this specification. The communications module 801 is configured to support communication between the second network device and another network entity, for example, communication between the second network device and a functional module or a network entity shown in FIG. 1. The second network device may further include a storage module 802, configured to store program code and data of the second network device.

The processing module 800 may be a processor or a controller, for example, a CPU, a general-purpose processor, a DSP, an ASIC, an FPGA, or another programmable logic device, a transistor logic device, a hardware component, or a combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications module 801 may be a transceiver, a transceiver circuit, or the like. The storage module 802 may be a memory.

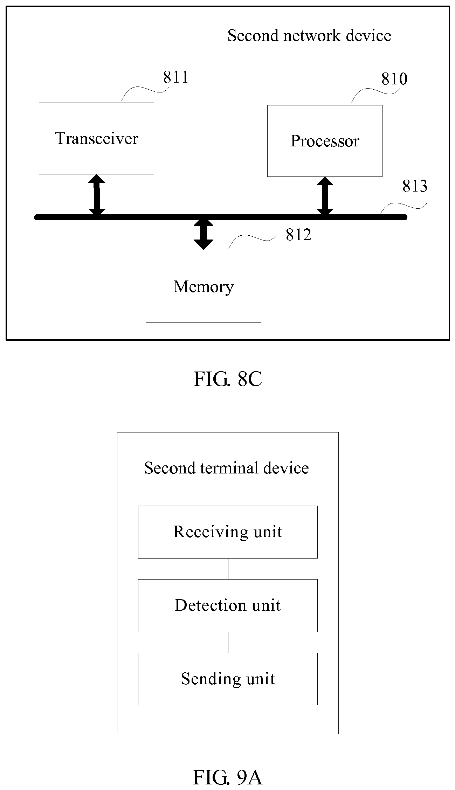

When the processing module 800 is a processor, the communications module 801 is a transceiver, and the storage module 802 is a memory, the second network device in the embodiments of this application may be a second network device shown in FIG. 8C.

Referring to FIG. 8C, the second network device includes a processor 810, a transceiver 811, a memory 812, and a bus 813. The transceiver 811, the processor 810, and the memory 812 are connected to each other by using the bus 813. The bus 813 may be a PCI bus, an EISA bus, or the like. The bus may be classified into an address bus, a data bus, a control bus, and the like. For ease of representation, only one thick line is used to represent the bus in FIG. 8C, but this does not mean that there is only one bus or only one type of bus.

When functional modules are designed based on functions, FIG. 9A is a possible schematic structural diagram of the second terminal device in the foregoing embodiments. The second terminal device includes a receiving unit, a detection unit, and a sending unit. The receiving unit is configured to support the second terminal device in performing the process S106 shown in FIG. 4A and the process S206 shown in FIG. 5A. The detection unit is configured to support the second terminal device in performing the process S107 shown in FIG. 4B and the process S207 shown in FIG. 5B. The sending unit is configured to support the second terminal device in performing the process S108 shown in FIG. 4B and the process S208 shown in FIG. 5B. All related content of steps in the foregoing method embodiments may be cited as function descriptions of corresponding functional modules, and details are not described herein again.

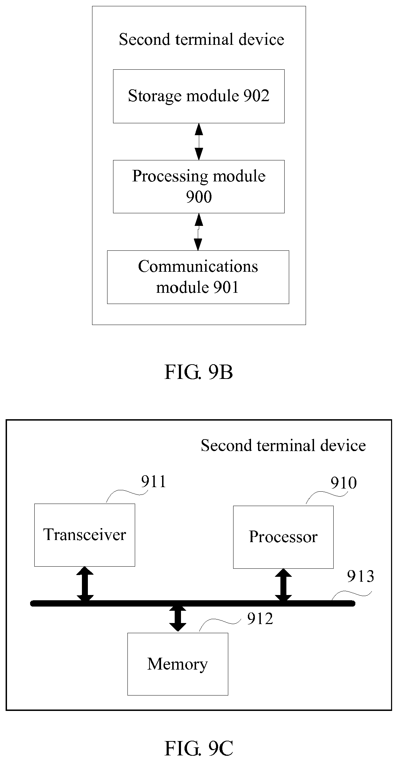

When an integrated unit is used, FIG. 9B is a possible schematic structural diagram of the second terminal device in the foregoing embodiments. The second terminal device includes a processing module 900 and a communications module 901. The processing module 900 is configured to control and manage an action of the second terminal device. For example, the processing module 900 is configured to support the second terminal device in performing the processes S106, S107, and S108 shown in FIG. 4A and FIG. 4B, the processes S206, S207, and S208 shown in FIG. 5A and FIG. 5B, and/or another process of the technology described in this specification. The communications module 901 is configured to support communication between the second terminal device and another network entity, for example, communication between the second terminal device and a functional module or a network entity shown in FIG. 1. The second terminal device may further include a storage module 902, configured to store program code and data of the second terminal device.

The processing module 900 may be a processor or a controller, for example, a CPU, a general-purpose processor, a DSP, an ASIC, an FPGA, or another programmable logic device, a transistor logic device, a hardware component, or a combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications module 901 may be a transceiver, a transceiver circuit, or the like. The storage module 902 may be a memory.

When the processing module 900 is a processor, the communications module 901 is a transceiver, and the storage module 902 is a memory, the second terminal device in the embodiments of this application may be a second terminal device shown in FIG. 9C.

Referring to FIG. 9C, the second terminal device includes a processor 910, a transceiver 911, a memory 912, and a bus 913. The transceiver 911, the processor 910, and the memory 912 are connected to each other by using the bus 913. The bus 913 may be a PCI bus, an EISA bus, or the like. The bus may be classified into an address bus, a data bus, a control bus, and the like. For ease of representation, only one thick line is used to represent the bus in FIG. 9C, but this does not mean that there is only one bus or only one type of bus.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

The embodiments of this application further provide a communications system. As shown in FIG. 1, the communications system includes the first network device shown in FIG. 6A, FIG. 6B, or FIG. 6C, the first terminal device shown in FIG. 7A, FIG. 7B, or FIG. 7C, the second network device shown in FIG. 8A, FIG. 8B, or FIG. 8C, and the second terminal device shown in FIG. 9A, FIG. 9B, or FIG. 9C.

A person skilled in the art should be aware that in the foregoing one or more examples, functions described in this application may be implemented by hardware, software, firmware, or any combination thereof. When being implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the several embodiments provided in this application, it should be understood that the disclosed system, apparatus, and method may be implemented in other manners. For example, the described apparatus embodiments are merely examples. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of a software functional unit.

When the integrated unit is implemented in the form of a software functional unit and sold or used as an independent product, the integrated unit may be stored in a computer-readable storage medium. Based on such an understanding, all or some of the technical solutions may be implemented in a form of a software product. The software product is stored in a storage medium, and includes several instructions for instructing a computer device (which may be a personal computer, a server, a network device, or the like) or a processor to perform all or some of the steps of the methods described in the embodiments of this application. The storage medium is a non-transitory (non-transitory) medium, and includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for measuring interference between terminal devices, wherein the method comprises:
sending, by a first network device, first indication information to a first terminal device, wherein the first indication information is used to instruct the first terminal device to generate a pilot sequence based on sequence parameters, and send the pilot sequence on a time-frequency resource, and the first terminal device is a terminal device within a coverage area of the first network device; and
sending, by the first network device, second indication information to a second network device, wherein the second indication information is used to instruct the second network device to trigger a second terminal device to: detect the pilot sequence on the time-frequency resource based on the sequence parameters, and determine whether the first terminal device is an interference source of the second terminal device, and the second terminal device is a terminal device within a coverage area of the second network device.

2. The method according to claim 1, wherein the sequence parameters comprise an identifier of the first network device and an identifier of the first terminal device, and the identifier of the first terminal device is allocated by the first network device to the first terminal device.

3. The method according to claim 2, wherein the identifier of the first terminal device is a number or a cyclic shift allocated by the first network device to the first terminal device.

4. The method according to any one of claims 1 to 3, wherein the method further comprises:
receiving, by the first network device, interference source information sent by the second network device, wherein the interference source information is used to indicate that the first terminal device is an interference source of the second terminal device.

5. A method for measuring interference between terminal devices, wherein the method comprises:
receiving, by a first terminal device, first indication information sent by a first network device, wherein the first indication information is used to instruct the first terminal device to generate a pilot sequence based on sequence parameters and send the pilot sequence on a time-frequency resource, and the first terminal device is a terminal device within a coverage area of the first network device;
generating, by the first terminal device, the pilot sequence based on the sequence parameters; and
sending, by the first terminal device, the pilot sequence on the time-frequency resource.

6. The method according to claim 5, wherein the sequence parameters comprise an identifier of the first network device and an identifier of the first terminal device, and the identifier of the first terminal device is allocated by the first network device to the first terminal device.

7. The method according to claim 6, wherein the identifier of the first terminal device is a number or a cyclic shift allocated by the first network device to the first terminal device.

8. The method according to any one of claims 5 to 7, wherein the sending, by the first terminal device, the pilot sequence on the time-frequency resource comprises:
sending, by the first terminal device, the pilot sequence on the time-frequency resource in an extended cyclic prefix manner.

9. The method according to any one of claims 5 to 8, wherein the sending, by the first terminal device, the pilot sequence on the time-frequency resource comprises:
sending, by the first terminal device, the pilot sequence on the time-frequency resource by using transmit power of a physical uplink shared channel.

10. A method for measuring interference between terminal devices, wherein the method comprises:
receiving, by a second network device, second indication information sent by a first network device, wherein the second indication information is used to instruct the second network device to trigger a second terminal device to: detect a pilot sequence on a time-frequency resource based on sequence parameters, and determine whether a first terminal device is an interference source of the second terminal device, the pilot sequence is generated by the first terminal device based on the sequence parameters, the second terminal device is a terminal device within a coverage area of the second network device, and the first terminal device is a terminal device within a coverage area of the first network device; and
sending, by the second network device, third indication information to the second terminal device, wherein the third indication information is used to instruct the second terminal device to: detect the pilot sequence on the time-frequency resource based on the sequence parameters, and determine whether the first terminal device is an interference source of the second terminal device.

11. The method according to claim 10, wherein the method further comprises:
receiving, by the second network device, fourth indication information sent by the second terminal device, wherein the fourth indication information is used to indicate that the first terminal device is an interference source of the second terminal device; and
sending, by the second network device, interference source information to the first network device based on the fourth indication information, to indicate, to the first network device, that the first terminal device is an interference source of the second terminal device.

12. A method for measuring interference between terminal devices, wherein the method comprises:
receiving, by a second terminal device, third indication information sent by a second network device, wherein the third indication information is used to instruct the second terminal device to: detect a pilot sequence on a time-frequency resource based on sequence parameters, and determine whether a first terminal device is an interference source of the second terminal device, the pilot sequence is generated by the first terminal device based on the sequence parameters, the second terminal device is a terminal device within a coverage area of the second network device, and the first terminal device is a terminal device within a coverage area of a first network device;
detecting, by the second terminal device on the time-frequency resource based on the third indication information and the sequence parameters, the pilot sequence sent by the first terminal device, and determining that the first terminal device is an interference source of the second terminal device; and
sending, by the second terminal device, fourth indication information to the second network device, wherein the fourth indication information is used to indicate that the first terminal device is an interference source of the second terminal device.

13. The method according to claim 12, wherein the detecting, by the second terminal device on the time-frequency resource based on the third indication information and the sequence parameters, the pilot sequence sent by the first terminal device, and determining that the first terminal device is an interference source of the second terminal device comprises:
receiving, by the second terminal device on the time-frequency resource based on the third indication information and the sequence parameters, the pilot sequence sent by the first terminal device; and
when the second terminal device determines that receive power at which the pilot sequence is received is greater than or equal to a threshold, determining, by the second terminal device, that the first terminal device is an interference source.

14. The method according to claim 12 or 13, wherein the sequence parameters comprise an identifier of the first network device and an identifier of the first terminal device, and the identifier of the first terminal device is allocated by the first network device to the first terminal device.

15. The method according to claim 14, wherein the identifier of the first terminal device is a number or a cyclic shift allocated by the first network device to the first terminal device.

16. A network device, comprising:
a sending unit, configured to send first indication information to a first terminal device, wherein the first indication information is used to instruct the first terminal device to generate a pilot sequence based on sequence parameters and send the pilot sequence on a time-frequency resource, and the first terminal device is a terminal device within a coverage area of the network device; wherein
the sending unit is further configured to send second indication information to a second network device, wherein the second indication information is used to instruct the second network device to trigger a second terminal device to: detect the pilot sequence on the time-frequency resource based on the sequence parameters, and determine whether the first terminal device is an interference source of the second terminal device, and the second terminal device is a terminal device within a coverage area of the second network device.

17. The network device according to claim 16, wherein the sequence parameters comprise an identifier of the network device and an identifier of the first terminal device, and the identifier of the first terminal device is allocated by an allocation unit for the first terminal device.

18. The network device according to claim 17, wherein the identifier of the first terminal device is a number or a cyclic shift allocated by the allocation unit for the first terminal device.

19. The network device according to any one of claims 16 to 18, wherein the network device further comprises a receiving unit, and
the receiving unit is configured to receive interference source information sent by the second network device, wherein the interference source information is used to indicate that the first terminal device is an interference source of the second terminal device.

20. A terminal device, comprising:
a receiving unit, configured to receive first indication information sent by a first network device, wherein the first indication information is used to instruct the terminal device to generate a pilot sequence based on sequence parameters and send the pilot sequence on a time-frequency resource, and the terminal device is a terminal device within a coverage area of the first network device;
a generation unit, configured to generate the pilot sequence based on the sequence parameters; and
a sending unit, configured to send, on the time-frequency resource, the pilot sequence generated by the generation unit.

21. The terminal device according to claim 20, wherein the sequence parameters comprise an identifier of the first network device and an identifier of the terminal device, and the identifier of the terminal device is allocated by the first network device to the terminal device.

22. The terminal device according to claim 21, wherein the identifier of the terminal device is a number or a cyclic shift allocated by the first network device to the terminal device.

23. The terminal device according to any one of claims 20 to 22, wherein
the sending unit is specifically configured to send the pilot sequence on the time-frequency resource in an extended cyclic prefix manner.

24. The terminal device according to any one of claims 20 to 23, wherein
the sending unit is specifically configured to send the pilot sequence on the time-frequency resource by using transmit power of a physical uplink shared channel.

25. A network device, comprising:
a receiving unit, configured to receive second indication information sent by a first network device, wherein the second indication information is used to instruct the network device to trigger a second terminal device to: detect a pilot sequence on a time-frequency resource based on sequence parameters, and determine whether a first terminal device is an interference source of the second terminal device, the pilot sequence is generated by the first terminal device based on the sequence parameters, the second terminal device is a terminal device within a coverage area of the second network device, and the first terminal device is a terminal device within a coverage area of the first network device; and
a sending unit, configured to send third indication information to the second terminal device, wherein the third indication information is used to instruct the second terminal device to: detect the pilot sequence on the time-frequency resource based on the sequence parameters, and determine whether the first terminal device is an interference source of the second terminal device.

26. The network device according to claim 25, wherein
the receiving unit is further configured to receive fourth indication information sent by the second terminal device, wherein the fourth indication information is used to indicate that the first terminal device is an interference source of the second terminal device; and
the sending unit is further configured to send interference source information to the first network device based on the fourth indication information received by the receiving unit, to indicate, to the first network device, that the first terminal device is an interference source of the second terminal device.

27. A terminal device, comprising:
a receiving unit, configured to receive third indication information sent by a second network device, wherein the third indication information is used to instruct a detection unit to: detect a pilot sequence on a time-frequency resource based on sequence parameters, and determine whether a first terminal device is an interference source of the terminal device, the pilot sequence is generated by the first terminal device based on the sequence parameters, the terminal device is a terminal device within a coverage area of the second network device, and the first terminal device is a terminal device within a coverage area of a first network device;
the detection unit, configured to: detect, on the time-frequency resource based on the third indication information and the sequence parameters, the pilot sequence sent by the first terminal device, and determine that the first terminal device is an interference source of the terminal device; and
a sending unit, configured to send fourth indication information to the second network device, wherein the fourth indication information is used to indicate that the first terminal device is an interference source of the terminal device.

28. The terminal device according to claim 27, wherein
the detection unit is specifically configured to: receive, on the time-frequency resource based on the third indication information and the sequence parameters, the pilot sequence sent by the first terminal device; and when determining that receive power at which the pilot sequence is received is greater than or equal to a threshold, determine that the first terminal device is an interference source.

29. The terminal device according to claim 27 or 28, wherein the sequence parameters comprise an identifier of the first network device and an identifier of the first terminal device, and the identifier of the first terminal device is allocated by the first network device to the first terminal device.

30. The terminal device according to claim 29, wherein the identifier of the first terminal device is a number or a cyclic shift allocated by the first network device to the first terminal device.

31. A communications apparatus, comprising a memory, wherein a computer instruction is stored in the memory, and when the computer instruction is executed, the communications apparatus performs the method performed by the first network device in any one of claims 1 to 4.

32. A communications apparatus, comprising a memory, wherein a computer instruction is stored in the memory, and when the computer instruction is executed, the communications apparatus performs the method performed by the first terminal device in any one of claims 5 to 9.

33. A communications apparatus, comprising a memory, wherein a computer instruction is stored in the memory, and when the computer instruction is executed, the communications apparatus performs the method performed by the second network device in claim 10 or 11.

34. A communications apparatus, comprising a memory, wherein a computer instruction is stored in the memory, and when the computer instruction is executed, the communications apparatus performs the method performed by the second terminal device in any one of claims 12 to 15.

35. A computer storage medium, wherein a computer instruction is stored in the computer storage medium, and when the computer instruction runs on a computer, the computer performs the method performed by the first network device in any one of claims 1 to 4.

36. A computer storage medium, wherein a computer instruction is stored in the computer storage medium, and when the computer instruction runs on a computer, the computer performs the method performed by the first terminal device in any one of claims 5 to 9.

37. A computer storage medium, wherein a computer instruction is stored in the computer storage medium, and when the computer instruction runs on a computer, the computer performs the method performed by the second network device in claim 10 or 11.

38. A computer storage medium, wherein a computer instruction is stored in the computer storage medium, and when the computer instruction runs on a computer, the computer performs the method performed by the second terminal device in any one of claims 12 to 15.

39. A computer program product comprising a computer instruction, wherein when the computer program product runs on a computer, the computer performs the method performed by the first network device in any one of claims 1 to 4.

40. A computer program product comprising a computer instruction, wherein when the computer program product runs on a computer, the computer performs the method performed by the first terminal device in any one of claims 5 to 9.

41. A computer program product comprising a computer instruction, wherein when the computer program product runs on a computer, the computer performs the method performed by the second network device in claim 10 or 11.

42. A computer program product comprising a computer instruction, wherein when the computer program product runs on a computer, the computer performs the method performed by the second terminal device in any one of claims 12 to 15.
